Europäisches Patentamt

European Patent Office

Office européen des brevets

(11) Publication number : **0 560 509 A1**

# (12) EUROPEAN PATENT APPLICATION

(21) Application number : **93301367.4**

(22) Date of filing : **24.02.93**

(51) Int. Cl.⁵ : **A23P 1/08**, A23L 1/325, A23L 1/31

(30) Priority : **26.02.92 EP 9220550**

(43) Date of publication of application :
**15.09.93 Bulletin 93/37**

(84) Designated Contracting States :
**AT BE CH DE DK ES FR GB GR IE IT LI NL PT SE**

(71) Applicant : **UNILEVER PLC**
**Unilever House Blackfriars**
**London EC4P 4BQ (GB)**
(84) **GB IE**

(71) Applicant : **UNILEVER N.V.**
**Weena 455**
**NL-3013 AL Rotterdam (NL)**
(84) **BE CH DE DK ES FR GR IT LI NL PT SE AT**

(72) Inventor : **Buschmann, Urban**
**Im Rahnlandsfeld 2**
**W-3057 Neustadt 1 (DE)**
Inventor : **Laub, Johannes**
**Bahnhofstrasse 97**
**W-2860 Osterholz-Scharmbeck (DE)**
Inventor : **Sahr, Juergen**
**Marschbrookweg 86**
**W-2850 Bremerhaven (DE)**

(74) Representative : **Roscoe, Brian Corrie et al**
**UNILEVER PLC Patents Division Colworth**
**House Sharnbrook**
**Bedford MK44 1LQ (GB)**

(54) **Method of preparing a coated, frozen foodstuff.**

(57)   A method of preparing a frozen, coated, particulate foodstuff material, in which the foodstuff material is simultaneously frozen or deep-frozen and coated with a substantially continuous coating, by contacting edible liquid coating material in the presence of an innocuous refrigerant with the foodstuff particles or pieces with continuous agitation.

*Fig. 1.*

EP 0 560 509 A1

The present invention relates to a method of preparing a frozen, coated particulate foodstuff, as well as to the frozen, coated particulate foodstuff thus obtained.

The preparation of quick-frozen, individually coated food pieces has been described in American Patent Specification US-A-3,607,113 (Th.L. Roth). In this process individual food pieces are first quick-frozen and then weighed and transferred into an insulated, rotary tumbling drum, where they are sprayed with a sauce. The sauce is prepared by mixing various ingredients, homogenising at least a portion of the mixture, chilling the sauce to for example 28° to 30°F (-2.2°C to -1.1°C) and then spraying it in this chilled condition on to the foodstuff pieces. This is a very cumbersome procedure, which requires much energy and is very labour-intensive.

There is therefore still a need for a simple, but yet reliable method of coating food pieces or particulate food material.

EP 93 506 (Chef Automatique) discloses a method of freezing moist food with adhering powdered additive comprising agitating the foodstuff in freezing gas.

It has now been surprisingly found that it is possible to obtain a superior product to that described by the prior art by simultaneously freezing and coating food particles with a liquid coating material. This product has the advantages that (a) the liquid coating material provides a better base for sauce preparation and (b) the coating allows prolonged storage without either rancidity or dehydration problems.

Accordingly, the present invention relates to a method of preparing a frozen, coated, particulate foodstuff in which a particulate foodstuff material is simultaneously frozen or deep-frozen and coated with a substantially continuous coating by contacting an edible liquid coating material with the foodstuff material with continuous agitation in the presence of an innocuous refrigerant.

By "deep-frozen" is understood throughout this specification and the attached claims as meaning having a temperature of at least -20°C.

The particles or pieces of foodstuff material are selected from the group consisting of vegetables; fruit; fish, such as fish, shrimp; mammal meat and meat products, like beef, pork or lamb meat; poultry meat and meat products, like chicken or turkey meat; vegetable proteins, like soybean protein; fungal proteins, like mycoprotein; cheese, bakery products, cereal products, and mixtures of these materials. The use of fish, mammal meat, poultry meat, vegetables and mixtures thereof is preferred. Examples of meat products are various types of sausages.

The average particle size of the foodstuff material ranges from 3mm to 50mm and the shape of the particles or pieces may be of any kind, such as round, oval, ellipsoid, rectangular, multifacetted and the like.

The shape of fantasy figures, likes, trees, fish and letters is a preferred embodiment of the present invention.

The foodstuff material may previously at least partially have been cooked, and may have been treated with seasoning or flavouring agents, liquid smoke, herbs, spices or may have been marinaded and the like.

The pieces or particles of the foodstuff material may be homogeneous, i.e. consisting of one material, but may also comprise different foodstuffs, such as for instance combinations of meat and vegetables, meat and cheese, and the like.

The edible liquid coating material advantageously provides the particulate foodstuff material with a solid, substantially continuous, coating so that the foodstuff material upon prolonged storage does not loose substantial amounts of water due to evaporation. Furthermore the coating provides protection against rancidity.

The edible liquid coating material may additionally have the function to provide a specific taste and/or aroma to the particulate foodstuff material.

The edible liquid coating material may be selected from vegetable, animal or synthetic oils, fats, fat fractions, fat replacers, fat derivatives, sauces, aromatizing compositions, flavouring compositions and mixtures thereof.

The edible liquid coating material may comprise a material selected from fish, like fish, shrimps; mammal meat and meat products, like beef, pork and lamb meat, sausage product; poultry meat and meat products, like chicken and turkey meat; vegetable proteins, like soybean protein; oils, fats and fat replacers; water; bouillon; fungal proteins, like mycoprotein; caseinate; vegetables, like onion, red peppers, cabbage; dairy products, like cheese; egg material; fruit; herbs; spices; flavouring agents, particularly savoury flavouring agents; colouring agents; antioxidants; egg yolk material which has been modified with phospholipase A, and mixtures of these various materials.

Preferred fat derivatives are acylated monoglycerides and/or acylated diglyceride.

The fat may be of vegetable or animal origin and may be synthetic fat. It may be a single fat or fat fraction or a mixture of fats and/or fat fractions. At least part of the fat may be replaced by a low-calorie fat replacer.

Particularly suitable fat replacers are the edible polyesters of polyhydric alcohols having at least four free hydroxyl groups, such as polyglycerols, sugars or sugar alcohols, and saturated or unsaturated, straight or branched alkyl chain $C_8$-$C_{24}$ fatty acids. The polyhydric alcohol fatty acid polyesters include such polyesters or mixtures thereof of which, on an average, at least 70% of the polyhydric alcohol hydroxyl groups have been esterified with the fatty acids. Also fatty alkyl ether derivatives of glycerol, esters of $C_8$-$C_{24}$ fatty

alcohols and polycarboxylic acids, waxes and microcrystalline cellulose can be used for replacing at least part of the fat.

The proportion of edible liquid coating material to the foodstuff material may be from 5 to 40 percent by weight, preferably from 10 to 30 percent by weight.

The innocuous refrigerant which is used in the method according to the present invention preferably is carbon dioxide. The refrigerant is introduced into the apparatus in which the method is carried out, but part of the refrigerant may be admixed in solid form together with the particulate foodstuff material.

The method of the present invention is carried out in a closed apparatus in which means have been provided for continuously agitating the particulate foodstuff material. Preferably the apparatus consists of two adjacent troughs which are in open connection with one another, in each of which an axis with paddles has been provided.

It will be clear, however, that in principle any other apparatus, provided it is closed and is able to withstand some gas pressure, will be suitable to carry out the method according to the present invention.

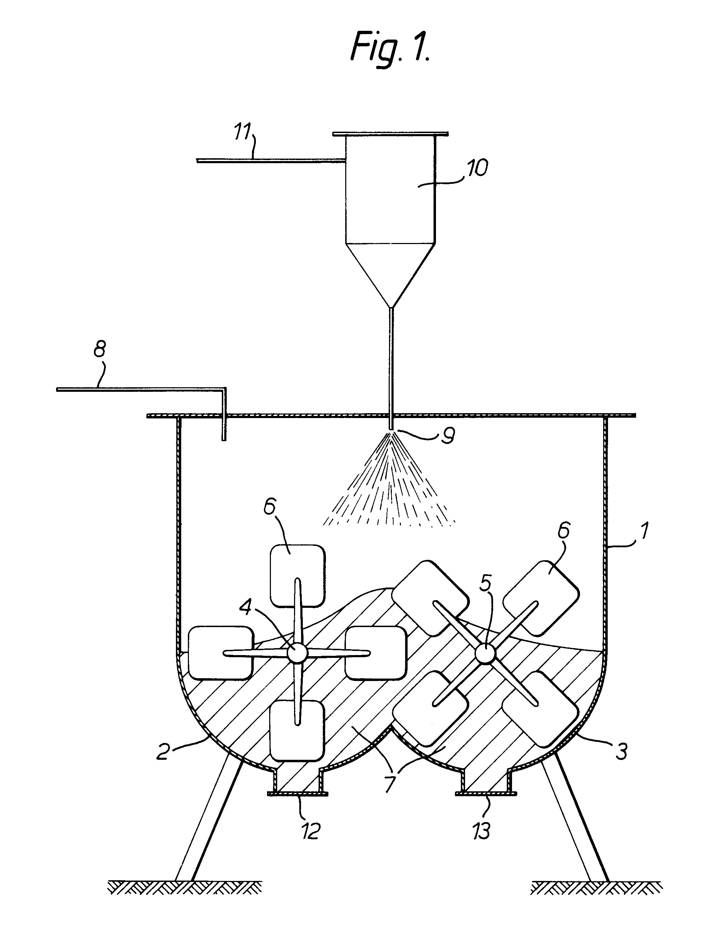

The invention is further illustrated by Figure 1, which is a schematical drawing of an apparatus 1, suitable for effecting the method according to the present invention. This apparatus consists of two elongate, adjacent troughs 2, 3 each of which has been provided with an axis 4, 5 onto which paddles 6 have been mounted. These paddles 6 may be attached in a suitable configuration with regard to the axis 4, 5. By the revolving paddles 6 the particulate foodstuff material 7, optionally admixed with some solid carbon dioxide, in the adjacent troughs 2, 3 is continuously agitated and at sufficient circumferential speed of the paddles 6, the particles or pieces of the foodstuff material are brought into a more or less fluidized state. Through main 8 the refrigerant is introduced into apparatus 1. Through the action of the innocuous refrigerant, the foodstuff material particles 7 are frozen or deep-frozen, i.e. brought in a relatively short time to a temperature of about -30°C to -40°C. Meanwhile, the edible liquid coating material is sprayed on to the agitated foodstuff material particles or pieces by means of a suitable spray nozzle 9. There may be provided a series of nozzles so as to distribute the liquid coating material evenly over the foodstuff material particles or pieces throughout the apparatus. In general, the nozzles are provided over the length direction of the adjacent troughs 2, 3. The liquid coating material usually is kept in a pressurized vessel 10 in which the liquid coating material can be heated or cooled. Main 11 connects the pressurized vessel with the liquid coating material preparation department.

In a different embodiment of the present invention the foodstuff material particles or pieces may already have been frozen previously before they are brought into the mixing apparatus and in that case the foodstuff material particles are simultaneously deep-frozen and coated in the apparatus. For example, fish particles may have been frozen to -20°C before they are brought into the mixing apparatus of Fig. 1. By introducing carbon dioxide, the fish particles are deep-frozen to -35°C to -40°C after which a sauce concentrate is introduced into the mixing apparatus and is sprayed by the nozzles 9 on to the agitated foodstuff material particles of pieces 7 during which the temperature in the mixing apparatus by suitable introduction of refrigerant is kept at for instance -35°C. If the coating process was completed, the free-flowing, deep-frozen sauce coated fish pieces were removed from the mixing apparatus 1 by bottom outlets 12, 13. The deep-frozen sauce coated pieces can be served as such, but may also be mixed with frozen vegetable particles and subsequently filled into boxes. Since both components of this mixture are deep-frozen, there is no need to freeze the package afterwards. Since the entire mixture is in a particulate, free-flowing form, it is very convenient for the consumer to dose required amounts from the package.

The invention will now be illustrated by the following examples:

## Example I

A sauce concentrate was prepared by mixing the following ingredients at room temperature, homogenizing the resultant mixtures for 2 minutes, taking care that the temperature was kept below 20°C:

| | |
|---|---|
| sauce | 24 kg |
| whole milk | 40 kg |
| wheat flour | 10 kg |
| starch | 5 kg |
| sodium caseinate | 2.5 kg |
| sodium chloride | 2.5 kg |
| spice mixture | 7.2 kg |

100 kg of frozen (-20°C) fish pieces (31x20x12 mm) were brought into a mixing apparatus of the type as depicted in Fig. 1. Carbon dioxide was introduced through main 8 to bring the air temperature in the mixing apparatus to -35°C to -40°C, whilst agitating the fish pieces. Subsequently, 25 litres of the sauce concentrate were sprayed on to the agitated fish pieces in 2 minutes, whilst keeping the air temperature in the mixing apparatus below -35°C by introduction of supplemental carbon dioxide. After having finished the coating process, the free-flowing, deep-frozen, sauce-coated fish pieces were removed from the mixing apparatus through outlet openings 12, 13.

The free-flowing, deep-frozen, sauce-coated fish pieces were mixed with deep-frozen, free-flowing vegetable particles in a weight ratio of 2 parts fish pieces to 1 part vegetable pieces. The mixture thus obtained was packaged in top-opening cardboard boxes, containing 400 grams of the particulate, deep-frozen mixture.

The product allowed a convenient individual portioning and could be prepaared in a conventional or microwave oven or in a pan after addition of the required amount of water, milk or cream.

An excellent fish and vegetable dish with sauce was obtained.

## Example II

Example I was repeated, but now using a sauce concentrate, prepared of:

| whole milk | 60 kg |
|---|---|
| cream | 100 kg |
| salt | 14 kg |
| tomato paste | 13 kg |
| spice mixture | 10 kg |
| starch | 14 kg |

Instead of using fish pieces, pieces of cooked beef (about 20 mm cubes) were coated in the same way as described in Example I and the free-flowing deep-frozen, sauce-coated pieces were further processed as described in Example I. Upon preparation in a microwave oven an excellent meat and vegetable dish with sauce was obtained.

## Claims

1. A method of preparing a frozen, coated, particulate foodstuff in which a particulate foodstuff material is simultaneously frozen and coated with a coating material by contacting the coating material with the foodstuff material with continuous agitation in the presence of an innocuous refrigerant characterized in that the foodstuff material is coated with a substantially continuous coating by contacting an edible liquid coating material with the foodstuff.

2. A method according to claim 1, in which the particles or pieces of foodstuff material are selected from vegetables, fruit, fish, mammal meat and meat products, poultry meat and meat products, vegetable proteins, fungal proteins, cheese, bakery products, cereal products, and mixtures thereof.

3. A method according to claim 1 or claim 2, in which the particles or pieces of foodstuff material have previously at least partially been cooked and frozen, seasoned, flavoured, or marinaded.

4. A method according to any preceding claim, in which the particles or pieces of foodstuff material consists of different foodstuff materials.

5. A method according to any preceding claim, in which the edible liquid coating material is selected from vegetable, animal, or synthetic oils, fats, fat fractions, fat replacers, fat derivatives, sauces, aromatizing compositions, flavouring compositions, and mixtures thereof.

6. A method according to claim 5, in which the edible liquid coating material comprises a material, selected from fish, mammal meat and meat products; poultry meat and meat products, vegetable proteins, oils, fats, fat replacers, water, bouillon, fungal protein, caseinate, vegetables, fruit, dairy products, egg material, egg yolk material which has been modified with phospholipase A, herbs, spices, fruit, flavouring agents, colouring agents, antioxidants, and mixtures thereof.

7. A method according to claim 5, in which the fat derivative comprises an acetylated monoglyceride and/or an acetylated diglyceride.

8. A method according to claim 5 or 6, in which the fat replacer comprises an edible polyester of a polyhydric alcohol having at least four free hydroxyl groups, and saturated or unsaturated, straight or branched alkyl chain $C_8$-$C_{24}$ fatty acids, in which fatty acid polyesters, on an average, at least 70% of the polyhydric, alcohol hydroxyl groups have been esterified with the fatty acids.

9. A method according to any preceding claim, in which the innocuous refrigerant is carbon dioxide.

10. A method according to any preceding claim, in which the weight proportion of edible liquid coating material to foodstuff material particles or pieces is from 5% to 40% by weight.

11. A deep-frozen, particulate, coated foodstuff material, whenever obtained by the method claimed in any one of the preceding claims.

12. A packaged deep-frozen meal, comprising the deep-frozen, particulate coated foodstuff material according to claim 11.

# Fig. 1.

EP 0 560 509 A1

**European Patent Office**

# EUROPEAN SEARCH REPORT

Application Number

EP 93 30 1367

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>Y | GB-A-2 075 326 (MORINAGA & CO.)<br><br>* claims 1,16,17,19,23,25,27-29 *<br>* page 1, line 67 - line 98 *<br>* page 2, line 5 - page 3, line 24 *<br>* examples 6-14 *<br>--- | 1-6,9-12<br>7,8 | A23P1/08<br>A23L1/325<br>A23L1/31 |
| Y | WO-A-9 115 964 (THE PROCTER & GAMBLE COMPANY)<br>* claims 1-3,9 *<br>* page 17, line 9 - page 18, line 28 *<br>--- | 8 | |
| Y | US-I-T883030 (L.J. LEE)<br>* the whole document *<br>--- | 7 | |
| A,D | EP-A-0 093 506 (CHEF AUTOMATIQUE INTERNATIONAL)<br>* claims 1,2,5,6,8 *<br>* page 2, line 26 - page 3, line 17 *<br>--- | 1-6,9-12 | |
| A,D | US-A-3 607 313 (T.L. ROTH)<br><br>* the whole document *<br>--- | 1-6,<br>10-12 | **TECHNICAL FIELDS SEARCHED (Int. Cl.5 )** |
| A | AU-B-561 821 (LIQUID AIR AUSTRALIA)<br>* claims 1,4-6,8,10-12 *<br>* page 3, line 36 - page 5, line 13 *<br>* page 5, line 39 - page 6, line 3 *<br>--- | 1 | A23P<br>A23L<br>A23B |
| A | AU-B-551 690 (HISATERU MITSUDA)<br>* claims 1,2 *<br>* page 4, line 20 - page 5, line 9 *<br>--- | 1 | |
| A | FR-A-2 191 849 (SOCIETE FRIGORIFIQUE DE NORMANDIE)<br>* claims 1-4 *<br>* page 1, line 1 - line 29 *<br><br>----- | 1-6,<br>10-12 | |

The present search report has been drawn up for all claims

| Place of search | Date of completion of the search | Examiner |
|---|---|---|
| THE HAGUE | 11 MAY 1993 | VUILLAMY V.M.L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P0401)

6